# DEMANDE DE BREVET EUROPEEN

(11) **EP 1 323 575 A1**
(43) Date de publication de la demande: **02.07.2003**
(21) Numéro de dépôt: 02293030.9
(22) Date de dépôt: 06.12.2002
(51) Int. Cl.: B60N 2/58, A47C 7/18

(54) **Procédé de réalisation d'un élement en mousse à revêtement tendu, et siège en cuir obtenu par ledit procédé**

(30) Priorité: 12.12.2001 FR 0116057
(71) Demandeur: Centre d'Etude et de Recherche pour l'Automobile ( CERA), 51100 Reims (FR)
(72) Inventeur: Mougel, Thierry, 08160 Balaives et Butz (FR)
(74) Mandataire: Geismar, Thierry

(57) **Abrégé**

L'invention concerne un procédé de réalisation d'un élément en mousse (1) pourvu d'un revêtement (2) sur au moins une partie de sa surface, comprenant les étapes consistant à :
- prévoir un flan souple (4) de forme sensiblement identique à celle du revêtement (2) ;
- superposer le revêtement (2) et le flan (4), puis les assembler l'un à l'autre de sorte à réaliser une coiffe ;
- disposer ladite coiffe dans la matrice d'un moule, le revêtement (2) étant en regard des parois de ladite matrice ;
- injecter un mélange précurseur de mousse à l'intérieur de la coiffe ;
- obtenir l'élément (1) par expansion de la mousse (5) ;
ledit procédé étant caractérisé en ce que, préalablement à l'injection du mélange précurseur de mousse, un support textile de renforcement (6) est associé sur la face (7) du flan (4) qui est destinée à être en contact avec la mousse (5).

L'invention concerne également un siège (3) notamment pour véhicule automobile obtenu par un tel procédé.

## Description

L'invention concerne un procédé de réalisation d'un élément en mousse pourvu d'un revêtement sur au moins une partie de sa surface, et un siège, notamment pour véhicule automobile, obtenu par un tel procédé.

On connaît déjà de nombreux procédés permettant de réaliser des éléments en mousse pourvus d'un revêtement.

En particulier, pour la réalisation de sièges destinés aux véhicules automobiles, on connaît des procédés de moussage dits « in situ » qui consistent à disposer dans un moule une coiffe formée par l'association d'un flan souple et d'un revêtement, et à injecter un mélange précurseur de mousse à l'intérieur de cette coiffe.

Le flan qui, pour des raisons de confort, doit être souple, a pour fonction d'empêcher l'imprégnation du revêtement par la mousse qui conduirait à une rigidification locale dudit revêtement, ce qui nuirait à la qualité de l'élément obtenu.

Dans ce type de procédé, la mousse, une fois formée, est solidaire du flan, et a tendance à se rétracter avec le temps, entraînant le flan de mousse et le revêtement dans son retrait. Lorsque le revêtement est peu déformable, par exemple en cuir, ce phénomène entraîne un plissage dudit revêtement qui conduit à un aspect peu satisfaisant de la pièce finie.

En outre, la présence de ces plis favorise une usure prématurée du revêtement.

Pour limiter le retrait de la mousse injectée dans la coiffe, il est possible d'utiliser des mousses dont la formulation permet de réduire le rendement gazeux, ou encore d'intégrer dans ladite mousse des inserts (toile de renfort, insert métallique par exemple).

Toutefois, ces solutions nécessitent l'utilisation de mousses spécifiques, dont le coût est plus élevé que celui des mousses utilisées classiquement, ou des procédés de moussage particuliers.

Pour pallier ces inconvénients, l'invention propose un procédé de réalisation d'un élément en mousse pourvu d'un revêtement sur au moins une partie de sa surface, permettant de maintenir dans le temps la tension du revêtement de sorte à obtenir, malgré le retrait de la mousse injectée, une pièce finie d'aspect satisfaisant.

Ce procédé permet d'injecter, à l'intérieur de la coiffe, des mélanges précurseurs de mousse classiques, et présente de plus l'avantage d'être facile à mettre en oeuvre, dans des cadences et des coûts compatibles avec ceux en vigueur dans l'industrie automobile.

A cet effet, et selon un premier aspect, l'invention propose un procédé de réalisation d'un élément en mousse pourvu d'un revêtement sur au moins une partie de sa surface, comprenant les étapes consistant à :
- prévoir un flan souple de forme sensiblement identique à celle du revêtement ;
- superposer le revêtement et le flan, puis les assembler l'un à l'autre de sorte à réaliser une coiffe ;
- disposer ladite coiffe dans la matrice d'un moule, le revêtement étant en regard des parois de ladite matrice ;
- injecter un mélange précurseur de mousse à l'intérieur de la coiffe ;
- obtenir l'élément par expansion de la mousse ;
dans lequel, préalablement à l'injection du mélange précurseur de mousse, un support textile de renforcement est associé sur la face du flan qui est destinée à être en contact avec la mousse.

Selon un deuxième aspect, l'invention propose un siège, notamment pour véhicule automobile, obtenu par la mise en oeuvre d'un tel procédé.

D'autres objets et avantages de l'invention apparaîtront au cours de la description qui suit, faite en référence aux dessins annexés dans lesquels :
- la figure 1 est une vue de face d'un siège en cuir pour véhicule automobile, obtenu selon un mode de réalisation du procédé selon l'invention ;
- la figure 2 est un schéma montrant la disposition des différentes couches de matériau utilisées pour la réalisation des zones centrales du siège de la figure 1 ; et
- la figure 3 est un schéma montrant la disposition des différentes couches de matériau utilisées pour la réalisation des zones latérales du siège de la figure 1.

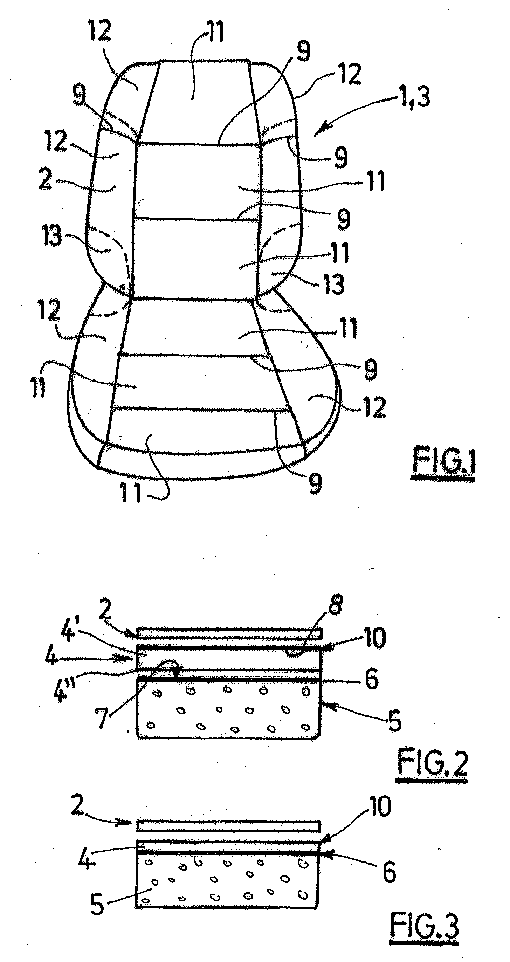

Le procédé selon l'invention est destiné à la réalisation d'un élément en mousse 1 pourvu d'un revêtement 2 sur au moins une partie de sa surface, tel que le siège 3 pour véhicule automobile représenté sur la figure 1.

A cet effet, un revêtement 2 et un flan souple 4 de formes sensiblement identiques sont tout d'abord obtenus, par exemple par découpage.

Le revêtement 2 et le flan 4 sont ensuite superposés, puis assemblés l'un à l'autre de sorte à réaliser une coiffe.

Cette coiffe est alors disposée dans la matrice d'un moule, de telle sorte que le revêtement 2 soit placé en regard des parois de ladite matrice, puis un mélange précurseur de mousse est injecté à l'intérieur de la coiffe, selon le procédé de moussage dit « in situ ».

Ainsi, après expansion de la mousse 5 formée par le mélange précurseur de mousse, et éventuellement fermeture de la coiffe, on obtient l'élément 1 en mousse souhaité, ladite mousse 5 étant solidarisée avec le flan 4.

Selon l'invention, il est prévu d'associer un support textile de renforcement 6 à la face 7 du flan 4 qui est destinée à être en contact avec la mousse 5, préalablement à l'injection du mélange précurseur de mousse. Ainsi, le flan 4 et la mousse 5 sont rendus solidaires par l'intermédiaire du support textile de renforcement 6, ledit support étant partiellement enrobé dans la mousse 5.

Ainsi, le support textile 6, d'une part partiellement enrobé dans la mousse 5 et d'autre part associé au flan 4, permet le renforcement du flan souple 4, de sorte à limiter le fléchissement du flan 4 qui accompagne habituellement le retrait de la mousse 5.

Par la présence du support textile de renforcement 6, le fléchissement du flan 4 est limité, voire empêché, et le revêtement 2 associé à l'autre face 8 du flan 4 demeure donc tendu. On obtient ainsi une pièce finie d'aspect satisfaisant, en particulier lorsque le revêtement 2 utilisé est peu déformable, et est susceptible de former des plis pour compenser le fléchissement du flan 4. Un tel phénomène est plus particulièrement observé lorsque le revêtement 2 est en cuir.

Dans un exemple particulier, le support textile de renforcement 6 est formé d'un matériau qui, après enrobage partiel dans la mousse 5, est peu sujet à l'allongement ou au retrait, par exemple un tricot maille.

Le flan souple 4 auquel il est associé peut être formé de mousse, le support textile 6 étant alors associé au flan 4 par exemple par collage ou flammage.

Selon un exemple particulier, le flan 4 peut être associé à la périphérie du revêtement 2, de sorte à laisser un espace libre entre le flan 4 et le revêtement 2. Dans ce cas, le fléchissement du flan 4 entraînerait l'augmentation de l'espace libre entre la surface du revêtement 2 et la surface du flan 4, ce qui augmenterait encore la possibilité de plissage dudit revêtement 2.

Selon un deuxième exemple, le flan 4 peut être, éventuellement en outre, collé à la surface du revêtement 2. Dans ce cas, le fléchissement du flan 4 pourrait entraîner un décollement indésirable entre les surfaces respectives du flan 4 et du revêtement 2.

Le choix entre ces deux exemples particuliers est fonction de l'aspect final de la pièce désiré, et du matériau utilisé pour former le flan 4 et le revêtement 2.

Dans une première variante du mode de réalisation décrit ci-dessus, le revêtement 2 ou le flan 4 sont formés d'au moins deux pièces assemblées entre elles. Ainsi, à titre d'exemple, le revêtement 2 peut être formé d'une seule pièce, le flan 4 étant formé de deux ou plusieurs pièces éventuellement formées d'un matériau différent qui, une fois assemblées entre elles, forment un flan 4 de forme sensiblement identique à celle du revêtement 2.

Et, inversement, le flan 4 peut être formé d'une seule pièce, le revêtement 2 étant formé de deux ou plusieurs pièces éventuellement formées d'un matériau différent qui, une fois assemblées entre elles, forment un revêtement 2 de forme sensiblement identique à celle du flan 4.

Dans une deuxième variante, le revêtement 2 et le flan 4 sont formés d'au moins deux pièces assemblées entre elles.

Dans ce cas, il peut également être prévu qu'à chaque pièce du revêtement 2 corresponde une pièce du flan 4 de forme sensiblement identique, les pièces du revêtement 2 et les pièces du flan 4 correspondantes étant superposées, la coiffe étant alors réalisée par assemblage des pièces superposées. Les pièces formant le flan 4 sont alors associées au revêtement 2 au niveau des zones d'assemblage 9 des pièces du revêtement 2. Dans le cas d'un siège en cuir 3, l'assemblage des pièces du revêtement 2 et/ou du flan 4 peut être notamment réalisé par couture.

Selon une réalisation, un deuxième support textile 10 est disposé entre le revêtement 2 et le flan 4, préalablement à l'assemblage du revêtement 2 et du flan 4 entre eux. Ce deuxième support textile 10, par exemple identique au support textile de renforcement 6, est destiné à favoriser le glissement du revêtement 2 sur le flan 4, tout en contribuant éventuellement au renforcement du flan 4.

On décrit à présent, en relation avec les figures 2 et 3, les différentes couches de matériau utilisées pour la réalisation du siège en cuir 3 représenté sur la figure 1.

La figure 2 représente schématiquement les différentes couches utilisées dans les zones centrales 11 du siège 3. Ces zones 11 comprennent successivement, de l'extérieur vers l'intérieur du siège 3 :
- un revêtement en cuir 2,
- un deuxième support textile 10 formé d'une maille filet ou d'une maille bloquée, obtenues sur un métier chaîne, par exemple de type polyamide 6-6 (de références respectives 66493 et 662538, chez DYLCO),
- un flan souple 4 composé de deux couches de mousse différentes 4' et 4" superposées et associées l'une à l'autre, à savoir, dans cet exemple, une couche de mousse haute résilience d'épaisseur comprise entre 8 et 10 mm et une couche de mousse BPD ou équivalent d'épaisseur égale à 3,5 mm,
- un support textile de renforcement 6 formé d'une maille filet ou d'une maille bloquée, obtenues sur un métier chaîne, par exemple de type polyamide 6-6 (de références respectives 66493 et 662538, chez DYLCO), et
- une couche de mousse expansée 5 de type polyuréthanne.

De façon analogue, la figure 3 représente les différentes couches utilisées dans les zones latérales 12 du siège 3. Ces zones comprennent successivement, de l'extérieur vers l'intérieur du siège 3 :
- un revêtement en cuir 2,
- un deuxième support textile 10 formé d'une maille filet ou d'une maille bloquée, obtenues sur un métier chaîne, par exemple de type polyamide 6-6 (de références respectives 66493 et 662538, chez DYLCO),
- un flan souple 4 composé de mousse LPT 45/20 HD d'épaisseur 3,5 mm,
- un support textile de renforcement 6 formé d'une maille filet ou d'une maille bloquée, obtenues sur un métier chaîne, par exemple de type polyamide 6-6 (de références respectives 66493 et 662538, chez DYLCO), et
- une couche de mousse expansée 5 de type polyuréthanne.

Les différences entre ces deux réalisations sont dictées par les efforts différents que les zones respectivement centrales 11 et latérales 12 ont à subir.

Dans le procédé de réalisation du siège 3 représenté sur la figure 1, on dispose sur les différentes pièces du revêtement en cuir des pièces du flan de formes correspondantes et de l'une des structures mentionnées ci-dessus en fonction de la position que les pièces de cuir doivent prendre, puis on associe par couture les pièces superposées, avant d'introduire le mélange précurseur de mousse dans la coiffe ainsi obtenue.

En variante, non représentée, il est possible, pour les zones du siège concaves ou comprenant un changement de plan 13, d'intégrer une couture noyée dans la mousse 5 au point d'inflexion, ceci pour maintenir la coiffe tendue en fond des parties concaves. Dans ces zones 13 du siège 3, il est possible d'utiliser des couches de matériau de même structure que celles utilisées pour les parties latérales 12 du siège 3.

## Revendications

1. Procédé de réalisation d'un élément en mousse (1) pourvu d'un revêtement (2) sur au moins une partie de sa surface, comprenant les étapes consistant à :
- prévoir un flan souple (4) de forme sensiblement identique à celle du revêtement (2) ;
- superposer le revêtement (2) et le flan (4), puis les assembler l'un à l'autre de sorte à réaliser une coiffe ;
- disposer ladite coiffe dans la matrice d'un moule, le revêtement (2) étant en regard des parois de ladite matrice ;
- injecter un mélange précurseur de mousse à l'intérieur de la coiffe ;
- obtenir l'élément (1) par expansion de la mousse (5) ;
ledit procédé étant **caractérisé en ce que**, préalablement à l'injection du mélange précurseur de mousse, un support textile de renforcement (6) est associé sur la face (7) du flan (4) qui est destinée à être en contact avec la mousse (5).

2. Procédé selon la revendication 1, **caractérisé en ce que** le flan (4) est associé à la périphérie du revêtement (2).

3. Procédé selon la revendication 1 ou 2, **caractérisé en ce que** le flan (4) est collé sur la surface du revêtement (2).

4. Procédé selon l'une quelconque des revendications 1 à 3, **caractérisé en ce que** le revêtement (2) et/ou le flan (4) sont formés d'au moins deux pièces assemblées entre elles.

5. Procédé selon la revendication 4, **caractérisé en ce que** les pièces du flan (4) et/ou les pièces du revêtement (2) sont formées d'un matériau différent.

6. Procédé selon la revendication 4 ou 5, **caractérisé en ce qu'**à chaque pièce du revêtement (2) correspond une pièce du flan (4) de forme sensiblement identique, les pièces du revêtement (2) et les pièces du flan (4) correspondantes étant superposées, la coiffe étant réalisée par assemblage des pièces superposées.

7. Procédé selon l'une quelconque des revendications 1 à 6, **caractérisé en ce qu'**un deuxième support textile (10) est disposé entre le revêtement (2) et le flan (4), préalablement à leur assemblage.

8. Procédé selon l'une quelconque des revendications 1 à 7, **caractérisé en ce que** le support textile de renforcement (6) est un tricot maille.

9. Procédé selon l'une quelconque des revendications 1 à 8, **caractérisé en ce que** le flan souple (4) est formé d'au moins une couche de mousse (4', 4").

10. Procédé selon l'une quelconque des revendications 1 à 9, **caractérisé en ce que** le support textile de renforcement (6) est associé au flan (4) par collage ou analogue.

11. Siège (3), notamment pour véhicule automobile, obtenu par la mise en oeuvre du procédé selon l'une quelconque des revendications 1 à 9, **caractérisé en ce que** le revêtement (2) est en cuir.
